# EUROPÄISCHE PATENTSCHRIFT

(11) **EP 4 298 150 B1**
(45) Veröffentlichungstag und Bekanntmachung des Hinweises auf die Patenterteilung: **18.12.2024**
(21) Anmeldenummer: 22748236.1
(22) Anmeldetag: 23.06.2022
(51) Int. Cl.: C08G 65/48, H01M 50/414, C25B 13/08, H01M 4/62, H01M 8/1025, H01M 8/10

(54) **PHOSPHONIERTE NICHTFLUORIERTE UND TEILFLUORIERTE ARYLPOLYMERE AUS SULFONIERTEN ARYLPOLYMEREN UND POLYMERE PERFLUORPHOSPHONSÄUREN AUS POLYMEREN PERFLUORSULFONSÄUREN, DEREN HERSTELLUNGSVERFAHREN UND ANWENDUNG IN ELEKTROMEMBRANANWENDUNGEN**
PHOSPHONIC NON-FLUOROINATED AND PARTIALLY FLUORINATED ARYLPOLYMERS FROM SULPHONATED ARYLPOLYMERS AND POLYMERIC PERFLUOROPHOSPHONIC ACIDS FROM POLYMERIC PERFLUOROSULPHONIC ACIDS, METHOD OF MANUFACTURE AND USE IN ELECTROMEMBRANE APPLICATIONS
ARYLPOLYMÈRES PHOSPHONIQUES NON FLUORÉS ET PARTIELLEMENT FLUORÉS À PARTIR D'ARYLPOLYMÈRES SULFONÉS ET D'ACIDES PERFLUOROPHOSPHONIQUES POLYMÈRES À PARTIR D'ACIDES PERFLUOROSULFONIQUES POLYMÈRES, PROCÉDÉ DE FABRICATION ET UTILISATION DANS DES APPLICATIONS ÉLECTROMEMBRANES

(30) Priorität: 23.06.2021 DE 102021003228
(43) Veröffentlichungstag der Anmeldung: 03.01.2024
(73) Patentinhaber: Riva Power Systems GmbH & Co. KG, 71522 Backnang (DE)
(72) Erfinder: CHROMIK, Andreas, 71364 Winnenden (DE)
(74) Vertreter: Gleim Petri Patent- und Rechtsanwaltspartnerschaft mbB
(86) Internationale Anmeldenummer: PCT/DE2022/100466
(87) Internationale Veröffentlichungsnummer: WO 2022/268265

(56) Entgegenhaltungen:
- WO-A2-2007/101415

## Beschreibung

### Stand der Technik:

Die am häufigsten beschriebenen phosphonierten Systeme beruhen auf Arylpolymeren, die mittels nucleophiler Substitution (Michaelis-Arbusow- und Michaelis-Becker Umlagerung) von Arylhalogeniden und Di- bzw. Trialkylphosphit synthetisiert werden.

Diese phosphonierten Arylpolymere haben eine hohe thermische und chemische Stabilität. Zudem zeigen sie eine gute Protonenleitfähigkeit auch im nicht befeuchteten Zustand. [1-5]

Nachteile dieser phosphonierten Arylpolymere z. B. aus DE 10 2011 015 212 A1 ist, dass diese im nicht hydrierten Zustand, also trocken, extrem spröde sind und so keine funktionstüchtigen Membranen hergestellt werden können. Das spröde Verhalten nimmt mit steigender Temperatur und sinkender Feuchtigkeit zu und führt zum mechanischen Versagen der Membran. Dies macht einen Einsatz dieser Polymere als Membran für Elektromembranverfahren im Bereich über 100°C nicht möglich.

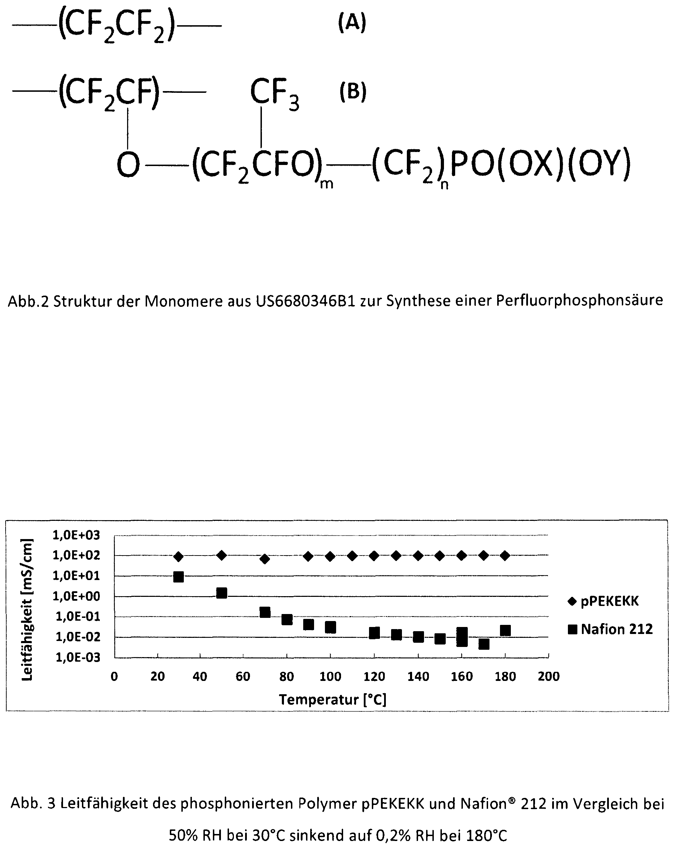

Im Patent US6680346B1 von Kyoji Kimoto wird eine direkte Synthese zu einer phosphonierten Perfluorphosphonsäure beschrieben. Der Anspruch bezieht sich dort auf folgende Struktur (Abb. 2) mit den Verhältnissen m ist 0 oder 1, n ist 2 oder 3, X,Y ist H oder C6H4SO3H und das Verhältnis von A/B ist 1,5 bis 15.

Aus EP2514773A1 geht hervor, dass die synthetisierten Polymere in US6680346B1, aufgrund von schwer kontrollierbaren Polymerisationsbedingungen, einer Zyklisierung unterworfen sind, die zu einem Kettentransfer während der Polymerisation führen und dadurch eine Abnahme des Molekulargewichts und der mechanischen Festigkeit der Materialien verursacht. Mit zunehmendem Molverhältnis von kurzkettigen phosphonylhaltigem Monomer zum Tetrafluorethylen-Monomer wird diese Nebenreaktion weiter gefördert, was die Erhöhung der lonenaustauschkapazität und der Materialstabilität einschränkt.

WO 2007/101415 A2 betrifft polymere Materialien zur Herstellung von Membranen in elektrochemischen Zellen und stellt sich unter anderem die Aufgabe, eine möglichst hohe Protonenleitfähigkeit auch unter reduzierter Befeuchtung zu erreichen. Die eingesetzten Polymere - bevorzugt Polyarylether - können unter anderem Sulfon- und Phosphonsäure-Gruppen tragen (Anspruch 1; Abbildungen 12, 22 und 27)

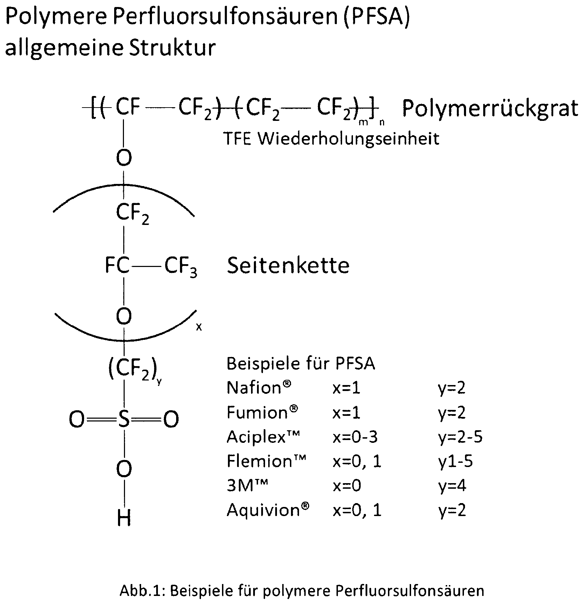

Das hier beanspruchte Verfahren, hat diese Einschränkung nicht, da polymere Perfluorsulfonsäuren heutzutage in gleichbleibender Qualität hergestellt werden können, Beispiele dafür sind in Abb. 1 zu sehen.

Die beschriebene Phosphonierungsreaktion führt somit zu einer neuen stabilen Materialklasse von polymeren Perfluorphosphonsäuren und besitzt nicht die Nachteile aus US6680346B1. Bei den sulfonierten Arylpolymeren verhält es sich genauso, hat das Grundpolymer bereits gute mechanische Eigenschaften, behält es diese in seiner neuen Form als phosphoniertes Polymer bei.

### Darstellung der Erfindung

Die erfinderische Tätigkeit beruht darauf, neue phosphonierte Polymere, die auch im trockenen Zustand protonenleitend, chemisch und mechanisch stabil sind, zu finden und zu synthetisieren. Dies wird erreicht, in dem man sulfonierte Polymere, die bereits gute mechanische Eigenschaften aufweisen und Sulfonsäuregruppen besitzen, mittels Sulfochlorierung mit Thionylchlorid zunächst in die -SO₂Cl Form überführt. Von der-SO₂Cl Form ausgehend, kann man bereits mit Trialkylphosphiten wie z. B. Tris(trimethylsilyl)phosphit (TTMSP) phosphonieren bzw. die -SO₂Cl Form mit Natriumsulfit in die -SO₂Na (Natriumsulfonat) Form überführen und diese phosphonieren, oder weitergehend die -SO₂Na Form in die -SO₂Li (Lithiumsulfonat) Form überführen und diese wiederum Phosphonieren. Mit diesem Verfahren lassen sich aus allen Polymeren mit Sulfonsäuregruppen, die phosphonierten Polymere mit einer hohen mechanischen Flexibilität, chemischen Stabilität und hohen Protonenleitfähigkeit synthetisieren. Die Polymere, die bereits in ihrer sulfonierten Form gute mechanische und chemische Eigenschaften besitzen, behalten diese nach der Phosphonierung bei und sind auch, anders als die sulfonsäurehaltigen Polymere, über 100°C sehr gut protonenleitend. (Abb. 3)

Die Reaktion möglichst effizient und einfacher Art sein soll, was hier gegeben ist.

Die phosphonierten Polymere sollen in gängigen Lösemitteln löslich sein, um daraus Membranen herstellen zu können.

Mit der hier beschriebenen Synthesemethode, kann prinzipiell aus allen sulfonierten Polymeren das phosphonierte Polymer synthetisiert werden.

Die Erfindung beruht auf dem Einfügen einer reaktiven Gruppe -X in ein sulfoniertes Polymer (-X kann sein, -SO₂Cl, -SO₂Na, -SO₂Li) und der Reaktion der reaktiven Gruppe, mit Trialkylphosphiten wie z. B. Tris(trimethylsilyl)phosphit (TTMSP).

Die phosphonierten Polymere können je nach Phosponierungsgrad noch freie reaktive Gruppen -X beinhalten. Diese freien Gruppen können verwendet werden, um die phosphonierten Polymere nachträglich kovalent zu vernetzen bzw. die nicht abreagierten Gruppen wieder in die -SO₃H Form zu überführen und somit ein Polymer zu erhalten welches sowohl sulfonierte als auch phosphonierte Gruppen enthält.

Die Phosphonierung kann in Lösung stattfinden. Hierfür können die Polymere mit der reaktiven Gruppe -X in Lösungsmitteln wie z. B. N-Methylpyrolidon (NMP), Dimethylacetamid (DMAc), Dimethylsulfoxid (DMSO) etc. gelöst werden. TTMSP kann wahlweise vorher, direkt beim Lösevorgang bzw. nachdem die Polymere gelöst sind zugegeben werden. Je nach gewünschtem Phosphonierungsgrad werden 0,1 Gew.% (Gewichtsprozent), geringer Phosphonierungsgrad, bis 5000 Gew.%, hoher Phosphonierungsgrad, bezogen auf die Polymereinwaage zugegeben.

Am besten und schnellsten funktioniert die Reaktion in hoch siedenden Lösungsmitteln wie NMP, DMAc und DMSO. Während der Reaktion ist eine Gasentwicklung zu beobachten, die anzeigt, wann die Reaktion startet bzw. endet, keine Gasentwicklung mehr.

Die Reaktion wird so lange auf Reaktionstemperatur (60-200°C), abhängig vom verwendeten Polymer, dessen Molekularmasse und Lösungsmittel gehalten, bis die Gasentwicklung stoppt. Anschließend wird die Reaktion weitere 2 - 8 Stunden auf Temperatur gehalten, um sicher zu sein, dass die Reaktion vollständig ist.

Anschließend werden Reaktionsnebenprodukte und überschüssiges TTMSP mittels Destillation entfernt und das phosphonierte Polymer, in Form seines Trimethylsilylesters, bleibt im Lösungsmittel zurück.

Die Polymerlösung wird nun in Wasser gegossen und fällt je nach Phosphonierungsgrad als Feststoff aus (niedriger Phosphonierungsgrad) bzw. geht in Lösung (hoher Phosphonierunsgrad). Durch Erhitzen der Wasser/Polymermischung wird das phosphonierte Polymer von seiner Trimethylsilylesterform zur freien polymeren Phosphonsäure hydrolisiert.

Zum vollständigen Abtrennen von Hydrolysenebenprodukten kann das Polymer je nach Phosponierungsgrad einfach mit Wasser gewaschen werden. Nicht wasserlösliche Anteile können mit Wasser ausgewaschen und abfiltriert werden bzw. wasserlösliche können durch Dialyse gereinigt werden.

Eine weitere Variante ist, die Polymerlösung nicht in Wasser auszufällen, sondern nach abtrennen des überschüssigen TTMSP die Polymerlösung aus [0015] direkt zu einer Membran weiter zu verarbeiten und diese anschließend in heißem bis kochendem Wasser zu hydrolysieren bzw. mit heißem Wasserdampf nachzubehandeln.

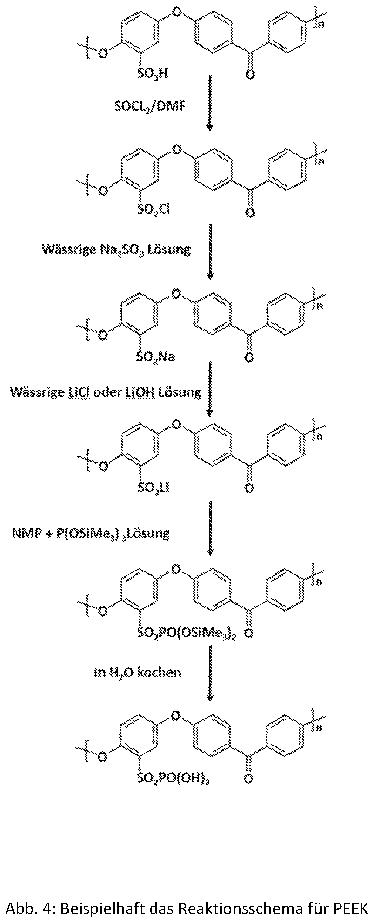

Eine entsprechende beispielhafte Reaktionsübersicht eines nicht einschränkenden Ausführungsbeispiels ist in Abb. 4 dargestellt.

Die erhaltenen Polymere können mit basischen Polymeren, wie z. B mit. Polybenzimidazol oder Anionentauscherpolymeren, zu Säure-Base-Blendmembranen, kovalent-vernetzten Membranen und kovalent-vernetzten Säure-Base Blendmembranen geblendet werden.

Das Mischungsverhältnis zwischen phosphoniertem und basischem Polymer kann zwischen 99 mol% phosphoniertes Polymer/1 mol% basisches Polymer und 1 mol% phosphoniertes Polymer/99 mol% basisches Polymer betragen.

Dem Polymer oder Blend kann noch zusätzlich ein beliebiges sulfoniertes Polymer in beliebiger Menge hinzugefügt werden kann.

Die erhaltenen Polymere können mit basischen Polymeren, wie z. B. Polybenzimidazol oder Anionentauscherpolymeren, zu Säure-Base-Blendmembranen, kovalent-vernetzten Membranen und kovalent-vernetzten Säure-Base Blendmembranen geblendet werden.

Das Mischungsverhältnis zwischen phosphoniertem und basischem Polymer kann zwischen 99 mol% phosphoniertes Polymer/1 mol% basisches Polymer und 1 mol% phosphoniertes Polymer/99 mol% basisches Polymer betragen.

Dem Polymer oder Blend kann noch zusätzlich ein beliebiges sulfoniertes Polymer in beliebiger Menge hinzugefügt werden.

Die Blendmembran kann noch zusätzlich mit Phosphorsäure in beliebiger Menge dotiert werden. Als Phosphorsäure-Dotierungsgrad werden Werte zwischen 40 Gew.% und 500 Gew.% bevorzugt.

Die erhaltenen Polymere können in elektrochemischen Zellen eingesetzt werden. Vorzugsweise können die erhaltenen Polymere in Nieder- oder Mitteltemperaturbrennstoffzellen im Temperaturbereich von -30°C bis 250°C oder in Nieder- oder Mitteltemperaturelektrolyseuren im Temperaturbereich von 0°C bis 250°C eingesetzt werden. Darüber hinaus können die erhaltenen Polymere in chemischen Synthesereaktoren von -70 bis 250°C. eingesetzt werden. Die erhaltenen Polymere können auch als Separator in Primär- und Sekundärbatterien oder als Binder in Elektroden, Primär- und Sekundärbatterien verwendet werden.

### Nicht einschränkendes Ausführungsbeispiel:

2 g eines sulfonierten Polyetherketonetherketonketon (sPEKEKK) werden mit 55 g Thionylchlorid versetzt, auf 90°C erhitzt und im Rückfluss gekocht. Anschließend gibt man DMF (Dimethylformamid) dazu und erhitzt so lange, bis keine Gasentwicklung mehr zu sehen ist. Anschließend wird noch 2 Stunden auf der Reaktionstemperatur gehalten, um die Vollständigkeit der Reaktion zu gewährleisten. Nun wir das überschüssige Thionylchlorid und Nebenprodukte abdestilliert und das Produkt mit THF (Tetrahydrofuran) aufgeschlämmt. Die Lösung/Suspension kann nun in Isopropanol oder Wasser ausgefällt werden. Das Produkt wird bis zur Neutralität gewaschen und anschließend getrocknet. Nun liegt das vorher sulfonierte Polymer in der -SO₂Cl Form vor. Nun wird das Produkt in einer 2 M Natriumsulfit Lösung in die -SO₂Na Form überführt. Das Polymer wird anschließend abfiltriert und wiederum mit Wasser gewaschen, um überschüssiges Natriumsulfit auszuwaschen. Anschließend wird das Polymer der -SO₂Na Form mit einer 10 wt% LiCl Lösung versetzt, um es in die -SO₂Li Form zu überführen. Anschließend wird das Polymer wiederum mit Wasser gewaschen, um überschüssige Salze auszuspülen. Abschließend wird das Polymer getrocknet.

Man kann die Phosphonierung mit TTMSP mit allen drei Formen, -SO₂Cl, -SO₂Na und -SO₂Li durchführen, wobei die -SO₂Li Form bevorzugt ist.

Das Polymer mit -SO₂Cl, -SO₂Na oder -SO₂Li Gruppen kann nun mit einem organischen Lösungsmittel wie DMAc, NMP, DMSO etc. und TTMSP versetzt werden und phosphoniert werden.

Bei den polymeren Perfluorsulfonsäuren kann man entweder vom Polymergranulat, Pulver etc. aus die Reaktion, wie in [0019] bis [0021] beschrieben durchführen, oder man hat die Möglichkeit, direkt die Perfluorsulfonsäuremembran zu verwenden. Dazu wird die Perfluorsulfonsäuremembran durch ein heißes Thionylchlorid/DMF Bad gezogen, in dem die Sulfochlorierung stattfindet, dann durch ein Wasserbad gezogen, um zu spülen. Anschließend wird die Membran, die nun die-SO₂Cl Form hat, durch ein Natriumsulfit Bad gezogen, wobei die -SO₂Na Form entsteht und anschließend zum Spülen wieder durch ein Wasserbad gezogen. Anschließend wir die Membran in der -SO₂Na Form durch ein LiCl Bad gezogen und in die -SO₂Li Form überführt und anschließend wieder in einem Wasserbad gewaschen. Alle drei Formen der Membran, -SO₂Cl, -SO₂Na und -SO₂Li können durch ein erhitztes TTMSP Bad gezogen werden und abschließend durch ein heißes/kochendes Wasserbad gezogen, um durch Hydrolyse, die phosphonsäure Form zu erhalten. Dies kann man sowohl in einem kontinuierlichen Rolle-zu-Rolle Verfahren umsetzen, ist aber auch im Batchverfahren möglich. Nun kann man die Membran trocknen und direkt wieder einsetzen. Bevorzugt für die Phosphonierung ist die -SO₂Li Form.

### Analytik des Versuchs:

Hier wird beispielhaft eins der phosphonierten Polymere beschrieben, dessen Ionenaustauscherkapazität, Leitfähigkeit bis 180°C (Abb. 3).

### Bestimmung der lonenaustauscherkapazität

100 mg des aufbereiteten Polymers werden mit einer gesättigten NaCl Lösung überschichtet, ca. 2h gerührt und 2 Tropfen Bromthymolblau als Indikator zugegeben. Dabei tauschen die Protonen des phosphonierten Polymers mit den Na-Ionen und es entsteht HCl. Diese HCl kann mittels Titration mit 0,1 mol NaOH nachgewiesen werden. Daraus lässt sich der IEC_{direkt} bestimmen. Um den Gesamt IEC_{Gesamt} zu bestimmen, werden zu selben Lösung 3ml NaOH 0,1M im Überschuss dazu gegeben, wieder 2h gerührt und anschließend mit HCl zurück titriert.

Für den Versuch in [0019] erhält man für das phosphonierte PEKEKK (pPEKEKK) einen IEC_{direkt}= 0,95 mmol/g und IEC_{Gesamt} = 2,2 mmol/g. Die sehr gute Protonenleitung, auch über 100°C kann man an der Leitfähigkeitsmessung in Abb. 3 sehr gut sehen. Zudem sieht man im Vergleich eine Nafion 212 und deren Abnahme in der Leitfähigkeit unter denselben Messbedingungen bei 50% RH bei 30°C sinkend auf 0,2% RH bei 180°C.

Die hohe Leitfähigkeit bei hohen Temperaturen kann dadurch begründet sein, dass die SO₂-Gruppe einen stark ziehenden Effekt auf die Elektronen der Phosponsäuregruppe auswirkt.

### Literatur

[1] Vladimir Atanasov and Jochen Kerres Highly Phosphonated Polypentafluorostyrene; Macromolecules 2011, 44, 16, 6416-6423
[2] Vladimir Atanasov, Dietrich Gudat, Bastian Ruffmann, Jochen Kerres, Highly phosphonated polypentafluorostyrene: Characterization and blends with polybenzimidazole, European Polymer Journal, Volume 49, Issue 12, 2013, Pages 3977-3985,
[3] Vladimir Atanasov, Matthias Bürger, Sandrine Lyonnard, Lionel Porcar, Jochen Kerres, Sulfonated poly(pentafluorostyrene): Synthesis & characterization, Solid State lonics, Volume 252, 2013, Pages 75-83,
[4] Vladimir Atanasov, Jochen Kerres, ETFE-g-pentafluorostyrene: Functionalization and proton conductivity, European Polymer Journal, Volume 63, 2015, Pages 168-176,
[5] Vladimir Atanasov, Andrey Oleynikov, Jiabing Xia, Sandrine Lyonnard, Jochen Kerres, Phosphonic acid functionalized poly(pentafluorostyrene) as polyelectrolyte membrane for fuel cell application Journal of Power Sources, Volume 343, 2017, Pages 364-372

## Patentansprüche

1. Verfahren zur Herstellung phosphonierter Polymere aus Ursprungspolymeren, die Sulfonsäuregruppen enthalten,
mit folgenden Verfahrensschritten:
a) das Ursprungspolymer wird mittels Sulfochlorierung mit Thionylchlorid in die (-SO₂Cl)-Form umgesetzt,
b) das Zwischenprodukt wird mit Tris(trimethylsilyl)phosphit zum phosphonierten Polymer umgesetzt,
wobei das Urspungspolymer ein Mitglied, ausgewählt aus der Gruppe bestehend aus Polyimide, Polyetherketone (PEK), Polyetheretherketone (PEEK), Polyetherketonetherketonketon (PEKEKK), Polycarbonate, Polysulfone, Polysulfoxide, Polysulfide, nicht- und teilfluorierte Polyethersulfone, nicht- und teilfluorierte Polyetherethersulfone, Polyester, Polystyrole, polymeren Perfluorphosphonsäuren, ist.

2. Verfahren nach Anspruch 1,
**dadurch gekennzeichnet, dass**
nach Verfahrensschritt a) zunächst eine Umsetzung in die Natriumform (-SO₂Na) durch Reaktion mit Natriumsulfit erfolgt.

3. Verfahren nach Anspruch 2,
**dadurch gekennzeichnet, dass**
nach der Umsetzung in die Natriumform zunächst eine Umsetzung in die Lithiumform (-SO₂Li) durch Reaktion mit Lithiumchlorid bzw. Lithiumhydroxid oder einem anderen Lithiumsalz erfolgt.

4. Verfahren nach einem der vorstehenden Ansprüche,
**dadurch gekennzeichnet, dass**
Verfahrensschritt b) in einem Lösungsmittel, vorzugsweise in einem hochsiedenden Lösungsmittel, durchgeführt wird, wobei das Lösungsmittel mindestens ein Mitglied, ausgewählt aus der Gruppe bestehend aus N-Methylpyrrolidon (NMP), Dimethylacetamid (DMAc), Dimethylsulfoxid (DMSO), ist.

5. Verfahren nach Anspruch 4,
**dadurch gekennzeichnet, dass**
das Lösungsmittel während des Verfahrensschritts b) bis zur Siedetemperatur erhitzt wird.

6. Verfahren nach Anspruch 5
**dadurch gekennzeichnet, dass**
das Reaktionsgemisch mindestens 2 Stunden, vorzugsweise mindestens 8 Stunden auf Siedetemperatur des Lösungsmittels erhitzt wird.

7. Verfahren nach einem der vorstehenden Ansprüche,
**dadurch gekennzeichnet, dass**
nach Verfahrensschritt b) eine Rückreaktion der nicht abreagierten aktiven Gruppen (-SO₂Cl, Natriumform oder Lithiumform) in die Sulfonsäuregruppe erfolgt.

8. Verfahren nach einem der vorstehenden Ansprüche
**dadurch gekennzeichnet, dass**
die Menge des Tris(trimethylsilyl)phosphit 0,1 bis 5000 Gewichtsprozent des Zwischenprodukts beträgt.

9. Verfahren nach einem der vorstehenden Ansprüche,
**dadurch gekennzeichnet, dass**
das Ursprungspolymer als Membran vorliegt,
die Verfahrensschritte a) und b) durch ein Tauchbad in dem jeweiligen Reagenz durchgeführt werden, wobei jeweils anschließend an die Verfahrensschritte ein Spülen der Membran durch ein Tauchbad in Wasser erfolgt.

10. Phosphonierte Polymere und Membranen erhältlich nach einem der vorstehenden Ansprüche,
**dadurch gekennzeichnet, dass**
das Polymer sowohl Sulfongruppen als auch Phosphonsäuregruppen enthält.

11. Phosphonierte Polymere und Membranen erhältlich nach einem der vorstehenden Ansprüche,
**dadurch gekennzeichnet, dass**
es sich um ein phosphoniertes Polyetherketonetherketonketon (pPEKEKK) handelt.

12. Verwendung der Polymere und Membranen nach einem der Ansprüche 10 oder 11 in elektrochemischen Zellen.

13. Verwendung der Membranen nach Anspruch 12 in Nieder- oder Mitteltemperaturbrennstoffzellen im Temperaturbereich von -30°C bis 250°C.

14. Verwendung der Membranen nach Anspruch 12 in Nieder- oder Mitteltemperaturelektrolyseuren im Temperaturbereich von 0°C bis 250°C.

15. Verwendung der Membranen nach Anspruch 12 in chemischen Synthesereaktoren von -70 bis 250°C.

16. Verwendung der Membranen nach Anspruch 12 als Separator in Primär- und Sekundärbatterien

17. Verwendung der Polymere nach Anspruch 12 als Binder in Elektroden für Primär- und Sekundärbatterien

## Claims

1. Process for the preparation of phosphonated polymers from raw polymers containing sulfonic acid groups, comprising the following process steps:
a) the raw polymer is converted to the -SO₂Cl form by sulphochlorination with thionyl chloride,
b) the intermediate is reacted with tris(trimethylsilyl)phosphite to form the phosphonated polymer,
wherein the raw polymer is a member selected from the group consisting of polyimides, polyether ketones (PEK), polyether ether ketones (PEEK), polyetherketoneetherketoneketone (PEKEKK), polycarbonates, polysulfones, polysulphoxides, polysulphides, non- and partially fluorinated polyether sulphones, non- and partially fluorinated polyether ether sulphones, polyesters, polystyrenes, polymeric perfluorosulfonic acids.

2. Process according to claim 1,
**characterized in that**,
after process step a) conversion to the sodium form (-SO₂Na) is first carried out by reaction with sodium sulphite.

3. Process according to claim 2,
**characterized in that**,
after the conversion to the sodium form, a conversion to the lithium form (-SO₂Li) is first carried out by reaction with lithium chloride or lithium hydroxide or another lithium salt.

4. Process according to any one of the preceding claims,
**characterized in that**,
the method step b) is carried out in a solvent, preferably a high boiling solvent, which is a least one member selected from the group consisting of N-methylpyrolidone (NMP), dimethylacetamide (DMAc), dimethylsulfxide (DMSO).

5. Process according to claim 4,
**characterized in that**,
the solvent is heated to boiling temperature during process step b).

6. Process according to claim 5,
**characterized in that**,
the reaction mixture is heated to boiling temperature of the solvent for at least 2 hours, preferably at least 8 hours.

7. Process according to any one of the preceding claims,
**characterized in that**,
after process step b), the unreacted active groups (-SO₂Cl, sodium form or lithium form) are reacted back into the sulfonic acid group.

8. Process according to any one of the preceding claims,
**characterized in that**,
the amount of tris(trimethylsilyl)phosphite is 0.1 wt-% to 5000 wt-% of the intermediate.

9. Process according to any one of the preceding claims,
**characterized in that**,
the original polymer is in the form of a membrane,
the process steps a) and b) are carried out by immersion in the respective reagent, the process steps each are followed by rinsing of the membrane by immersion in water.

10. Phosphonated polymers and membranes optainable according to any of the preceding claims, **characterized in that** the polymer contains both sulfonic groups and phosphonic acid groups.

11. Phosphonated polymers and membranes optainable according to any one of the preceding claims, **characterized in that** it is a phosphonated polyetherketoneetherketoneketone (pPEKEKK).

12. Use of the polymers and membranes according to any one of claim 10 or claim 11 in electrochemical cells.

13. Use of the membranes according to claim 12 in low or medium temperature fuel cells in the temperature range from -30 °C to 250 °C.

14. Use of the membranes according to claim 12 in low or medium temperature electrolysers in the temperature range from 0 °C to 250 °C.

15. Use of the membranes according to claim 12 in chemical synthesis reactors from -70 °C to 250 °C.

16. Use of the membranes according to claim 12 as separators in primary and secondary batteries.

17. Use of the polymers according to claim 12 as binders in electrodes, primary and secondary batteries.

## Revendications

1. Procédé de production de polymères phosphonés à partir de polymères d'origine contenant des groupements d'acide sulfonique, le procédé comprenant les étapes suivantes :
a) le polymère d'origine est converti sous la forme (-SO₂Cl) par sulfochloration avec du chlorure de thionyle,
b) le produit intermédiaire est mis à réagir avec du tris(triméthylsilyl)phosphite pour former le polymère phosphoné,
le polymère d'origine étant un élément choisi dans le groupe comprenant les polyimides, les polyéther cétones (PEK), les polyétheréthercétones (PEEK), les polyéthercétoneéthercétonecétone (PEKEKK), les polycarbonates, les polysulfones, les polysulfoxydes, les polysulfures, les polyéthersulfones non et partiellement fluorés, les polyétheréthersulfones non et partiellement fluorés, les polyesters, les polystyrènes, les acides perfluorophosphoniques polymères.

2. Procédé selon la revendication 1,
**caractérisé en ce que**
après l'étape de procédé a), une conversion sous forme de sodium (-SO₂Na) est effectuée par réaction avec du sulfite de sodium.

3. Procédé selon la revendication 2,
**caractérisé en ce que**
après la conversion sous forme de sodium, une conversion sous forme de lithium (-SO2Li) est effectuée par réaction avec du chlorure de lithium ou de l'hydroxyde de lithium ou un autre sel de lithium.

4. Procédé selon l'une des revendications précédentes,
**caractérisé en ce que**
l'étape de procédé b) est réalisée dans un solvant, de préférence dans un solvant à point d'ébullition élevé, le solvant étant au moins un élément choisi dans le groupe comprenant la N-méthylpyrrolidone (NMP), le diméthylacétamide (DMAc), le diméthylsulfoxyde (DMSO).

5. Procédé selon la revendication 4,
**caractérisé en ce que**
le solvant est chauffé jusqu'au point d'ébullition au cours de l'étape de procédé b).

6. Procédé selon la revendication 5,
**caractérisé en ce que**
le mélange réactionnel est chauffé jusqu'à la température d'ébullition du solvant pendant au moins 2 heures, de préférence au moins 8 heures.

7. Procédé selon l'une des revendications précédentes,
**caractérisé en ce que**
après l'étape de procédé b), une réaction en retour des groupes actifs qui n'ont pas réagi (-SO₂Cl, forme de sodium ou forme de lithium) en groupe acide sulfonique est effectuée.

8. Procédé selon l'une des revendications précédentes,
**caractérisé en ce que**
la quantité de tris(triméthylsilyl)phosphite est de 0,1 à 5000 pour cent en poids du produit intermédiaire.

9. Procédé selon l'une des revendications précédentes,
**caractérisé en ce que**
le polymère d'origine est présent sous forme de membrane,
les étapes de procédé a) et b) sont réalisées par un bain d'immersion dans le réactif respectif, chaque étape de procédé étant suivie d'un rinçage de la membrane par un bain d'immersion dans l'eau.

10. Polymères et membranes phosphonatés pouvant être obtenus selon l'une des revendications précédentes,
**caractérisés en ce que**
le polymère contient aussi bien des groupes sulfone que des groupes acide phosphonique.

11. Polymères et membranes phosphonatés pouvant être obtenus selon l'une des revendications précédentes,
**caractérisé en ce que**
il s'agit d'une polyéthercétoneéthercétonecétone phosphonée (pPEKEKK).

12. Utilisation des polymères et membranes selon l'une des revendications 10 ou 11 dans des cellules électrochimiques.

13. Utilisation des membranes selon la revendication 12 dans des piles à combustible à basse ou moyenne température dans la gamme de températures allant de -30 °C à 250 °C.

14. Utilisation des membranes selon la revendication 12 dans des électrolyseurs à basse ou moyenne température dans la gamme de températures allant de 0 °C à 250 °C.

15. Utilisation des membranes selon la revendication 12 dans des réacteurs de synthèse chimique de -70 à 250 °C.

16. Utilisation des membranes selon la revendication 12 comme séparateur dans des batteries primaires et secondaires.

17. Utilisation des polymères selon la revendication 12 comme liants dans des électrodes de batteries primaires et secondaires.
